# EUROPEAN PATENT APPLICATION

(11) **EP 3 922 868 A1**
(43) Date of publication of application: **15.12.2021**
(21) Application number: 21174281.2
(22) Date of filing: 18.05.2021
(51) Int. Cl.: F16B 7/14, A63B 22/00

(54) **ADJUSTMENT SYSTEM OF GYMNASTIC MACHINE COMPONENTS AND GYMNASTIC MACHINE COMPRISING SAID ADJUSTMENT SYSTEM**

(30) Priority: 12.06.2020 IT 202000014068
(71) Applicant: Technogym S.p.A., 47521 Cesena, Forli'-Cesena (IT)
(72) Inventor: CEI, Daniele, 47521 CESENA (FC) (IT); URBINI, Fabio, 47521 CESENA (FC) (IT); FAEDI, Alberto, 47521 CESENA (FC) (IT)
(74) Representative: Tiburzi, Andrea

(57) **Abstract**

The present invention relates to an adjustment system (S) of a component (C) of a gymnastic machine of the type comprising a frame (T), in which a supporting element (E) of said component (C) is capable of sliding, from a retracted position, in which said supporting element (E) is completely or almost completely inserted inside said frame (T), to an extracted position, in which said supporting element (E) exits almost completely from said frame (T), moving through a plurality of intermediate adjustment positions, said system (S) comprising: at least one linear gear (2) fixable on said supporting element (E), and therefore capable of sliding from said retracted position to said extracted position and vice versa, an adjustment device (1), couplable to said frame (T), capable of engaging with said at least one linear gear (2), said system (S) being characterized in that said adjustment device (1) is capable of assuming a first position, or locking position, in which said adjustment device (1) is engaged with said at least one linear gear (2), so that said supporting element (E) is locked in said frame (T); a second position, or first release position, in which said adjustment device (1) is disengageable from said at least one linear gear (2), so that said supporting element (E) is capable to slide towards said extracted position, and a third position, or second release position, in which said adjustment device (1) is completely disengaged from said at least one linear gear (2), so that said supporting element (E) is capable to slide both towards said extracted position and towards said retracted position..

The present invention also relates to a gymnastic machine comprising said adjustment system.

## Description

The present invention relates to an adjustment system of gymnastic machine components, in particular of seats and/or seats and/or handlebars and/or supports for screens and/or interface devices.

The present invention also relates to a gymnastic machine comprising said adjustment system.

More specifically, the invention relates to a system of the said type, designed and manufactured in particular for the adjustment of components of gymnastic machines, in particular of seats and/or handlebars capable of sliding along vertical or horizontal directions, but which can be used for any component placed on a gymnastic machine, whose position adjustment is necessary.

In the following, the description will be directed to an adjustment system for the seats or handlebars of stationary bicycles, but it is clear that it should not be considered limited to this specific use.

As is well known, known, and currently widespread in the marketplace gymnastic machines, such as stationary bicycles, or machines for developing muscles, are usually equipped with moving components, such as a saddle or seat or similar supports on which the user sits down to perform the gymnastic exercise, or on which other parts of the body lean on, such as the torso, legs, and feet.

Such moving components have to be necessarily adjustable, according to a vertical or horizontal direction, or in both directions, to allow the user carrying out the gymnastic exercise in a safe and comfortable conditions, in relation to his height.

In known gymnastic machines, several mechanical solutions are implemented, which are capable of adjusting the positions of some components, such as saddles, seats, handlebars, both in a discrete way, as well as in a continuous way.

An example of discrete solutions is represented by a manually operated knob, slidingly associated to the frame of the gymnastic machine, to which a pin is connected that selectively inserts, at the user's discretion, into the holes made in the saddles or the seats or the movable supports posts, preventing it from descending under the user's weight.

This type of solution is inconvenient to use since the user might spend a long time reaching the desired adjustment position of the component of the gymnastic machine.

An example of continuous solutions is represented by a manually operated lever, to which a tooth is associated, which selectively engages with a denture obtained on the external surface of the saddles or the seats or the mobile supports, preventing its descent under the weight of the user.

All these known solutions, both with discrete and continuous adjustment, however, are not entirely stable during the user gymnastic exercise since they are subject to mechanical backlashes between the sleeve of the saddle or the seat or the support and the frame of the gymnastic machine.

Especially when, for example, the saddle or seat or support is almost completely extracted from the frame, the sleeve tends to oscillate or hit the frame, thus compromising the performance of the gymnastic exercise.

In the light of the above, it is therefore a scope of the present invention to provide an adjustment system for the components of the gymnastic machine, which is fast to use and allows the user quickly reaching the desired adjustment position of the component.

Another scope of the present invention is to provide an adjusting system of a component of the gymnastic machine capable of considerably reducing or completely eliminating the mechanical backlashes between the supporting element of the component and the frame.

It is therefore specific object of the present invention an adjustment system of a component of a gymnastic machine of the type comprising a frame, in which a supporting element of said component is capable of sliding, from a retracted position, in which said supporting element is completely or almost completely inserted inside said frame, to an extracted position, in which said supporting element exits almost completely from said frame, moving through a plurality of intermediate adjustment positions, said system comprising: at least one linear gear fixable on said supporting element, and therefore capable of sliding from said retracted position to said extracted position and vice versa, an adjustment device, couplable to said frame, capable of engaging with said at least one linear gear, said system being characterized in that said adjustment device is capable of assuming a first position, or locking position, in which said adjustment device is engaged with said at least one linear gear, so that said supporting element is locked in said frame; a second position, or first release position, in which said adjustment device is disengageable from said at least one linear gear, so that said supporting element is capable to slide towards said extracted position, and a third position, or second release position, in which said adjustment device is completely disengaged from said at least one linear gear, so that said supporting element is capable to slide both towards said extracted position and towards said retracted position.

Further according to the invention, said adjustment device comprises a first element, manually operated, a second element, capable of moving between an engagement and disengagement position from said at least one linear gear, said first element being capable of adjusting the movement of said second element between said engagement and disengagement positions.

Preferably according to the invention, said adjustment device comprises a lever, manually operated by a user, fixable to said first element and capable of adjusting the movement of said first element.

Still according to the invention, said first element comprises an appendix, capable of inserting in said lever, so that the movements carried out on said lever by a user are transmitted to said appendix, and a circular hollow body shaped on the external surface by means of a curved groove, comprising a first end and a second end, for adjusting the movement of said second element.

Further according to the invention, said first element is capable of rotating on itself according to a first rotation direction and according to a second rotation direction, opposite to said first rotation direction, and said second element is capable of moving axially in approaching and departing from said first element.

Preferably according to the invention, said first element comprises a circular hollow body on which a groove provided with a first end and a second end is obtained, and said second element comprises a first pin capable of sliding in said groove in order to go flush on said first end and then on said second end and vice versa, during the movement of said second element between said engagement position and said disengagement position from said at least one linear gear, and vice versa.

Still according to the invention, said second element comprises a tooth capable of engaging with said linear gear, when said adjustment device is in said first position, so as to lock said supporting element in a predetermined position, disengaging from said linear gear, when said adjusting device is in said second position, only in the sliding direction of said supporting element towards said extracted position, and disengaging from said linear gear, when said adjustment device is in said third position, both in the sliding direction of said supporting element towards said extracted position and to said retracted position.

Further according to the invention, said system comprises a V-shaped element, couplable to said supporting element of said gymnastic machine, and a wedge, couplable to said frame of said gymnastic machine, capable of engaging and locking said V-shaped element in said first position of said adjustment device, so as to eliminate the backlashes between said supporting element and said frame, in said first position.

Preferably according to the invention, said linear gear is a rack, and the number of positions of said plurality of adjustment positions is defined by the number of the teeth of said rack.

It is further object of the present invention a gymnastic machine of the type comprising a frame in which a supporting element of a component is capable of sliding, like a sitting, a handlebar, a monitor, an interface device, and the like, from a retracted position, in which the supporting element is completely or almost completely inserted inside said frame, to an extracted position, in which the supporting element exits almost completely from said frame, moving through a plurality of intermediate adjustment positions, characterized in that it comprises an adjustment system as defined above.

The present invention will be now described, for illustrative but not limitative purposes, according to its preferred embodiments, with particular reference to the figures of the enclosed drawings, wherein:
figure 1 shows a front view of the system for adjusting components of gymnastic machines, object of the present invention, in a locking position of the component;
figure 1a shows a sectional side view of the system shown in figure 1;
figure 1b shows a sectional top view of the system shown in figure 1;
figure 2 shows a front view of the system for adjusting components of gymnastic machines, object of the present invention, in a first release position of the component;
figure 2a shows a sectional side view of the system shown in figure 2;
figure 2b shows a sectional top view of the system shown in figure 2;
figure 3 shows a front view of the system for adjusting the components of gymnastic machines, object of the present invention, in a second release position of the component;
figure 3a shows a sectional side view of the system shown in figure 3;
figure 3b shows a sectional top view of the system shown in figure 3;
figure 4 shows an exploded view of a device included in the system shown in figure 1;
figure 5 shows a perspective view of an element of the system shown in figure 1;
figure 6 shows a top perspective view of the element shown in figure 5; and
figure 7 shows a top perspective view of an example of a gymnastic machine comprising the system, object of the present invention.

In the various figures, similar parts will be indicated by the same reference numbers.

Referring to the attached figures, the system S for adjusting the components of gymnastic machines, object of the present invention, can be installed on a gymnastic machine of the type comprising a frame T, in which a supporting element E slides, such as a sleeve.

A component C is coupled to said supporting element E, such as a seat, or a sitting, or a handlebar, or a monitor, or any interface component, which can be used by the user during the gymnastic exercise.

Said supporting element E is able to slide within the frame T, from a retracted position, in which it is completely or almost completely inserted inside said frame T, to an extracted position, in which it almost completely comes out from said frame T, passing through a plurality of intermediate adjustment positions.

Said system S essentially comprises an adjustment device 1, which can be installed on said frame T and a linear gear 2, such as a rack, which can be coupled to said supporting element or sleeve E and therefore able to move with said supporting element E, from said retracted position towards said extracted position and vice versa, passing through the plurality of intermediate adjustment positions.

Said plurality of intermediate adjustment positions is determined by the number of teeth of said rack 2.

Said adjustment device 1 is able to engage with said linear gear 2, both in said extracted position, and in said retracted position and in each position of said plurality of adjustment positions.

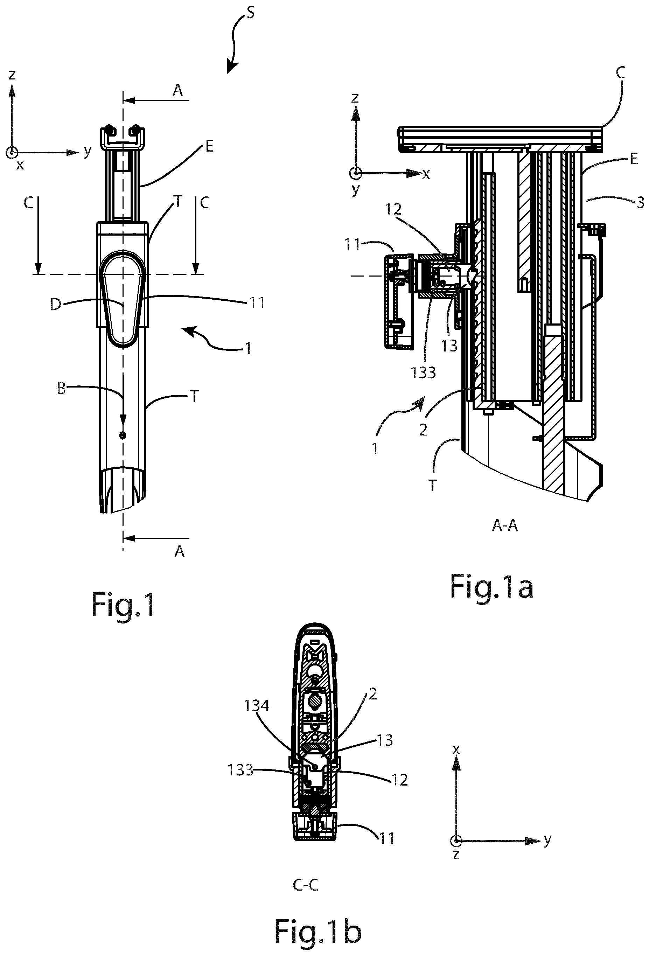

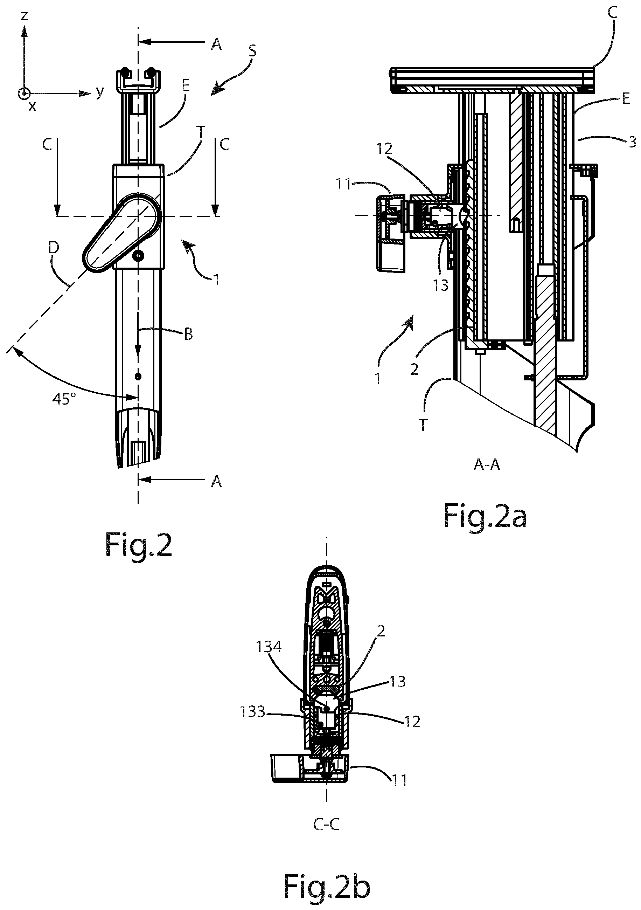

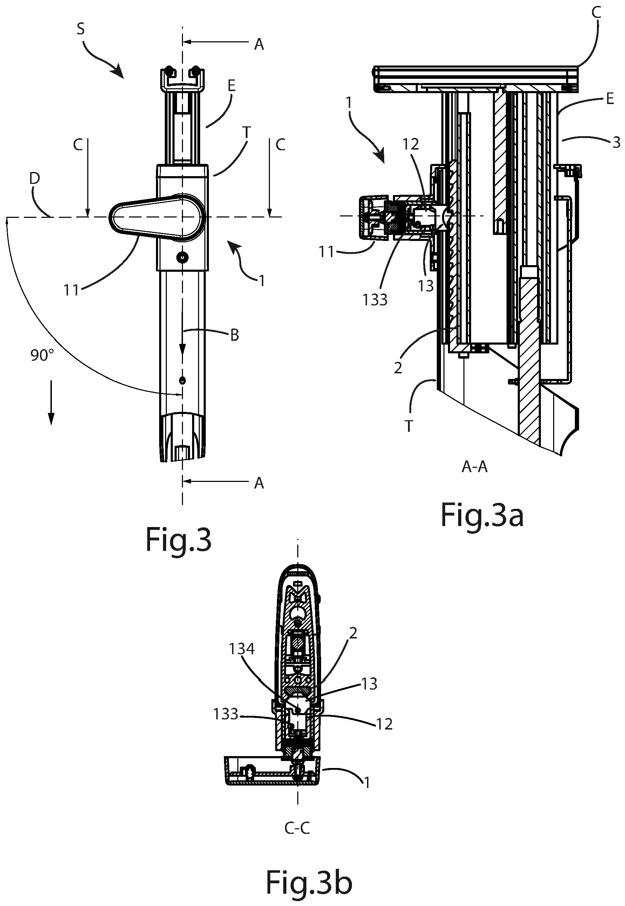

Referring to figures 1-3a, said adjustment device 1 is capable of assuming three different positions, and of passing from one position to another and vice versa, by means of a manual operation by the user.

In particular, in the first position, or locking position, said adjustment device 1 locks said element E, and therefore said component C, in a predetermined position selected by the user for carrying out the gymnastic exercise.

In a second position or first release position, said adjustment device 1 allows said supporting element E, and therefore said component C, sliding only towards said extracted position, therefore the user can lift said component C.

In a second position or first release position, said adjustment device 1 allows said supporting element E and therefore said component C, sliding towards said extracted position, therefore the user can lift said component C.

In said third position, said supporting element E, and therefore to said component C, is free to slide both towards said extracted position and said retracted position.

The displacements between the different positions of said adjustment device 1 will be described in detail below.

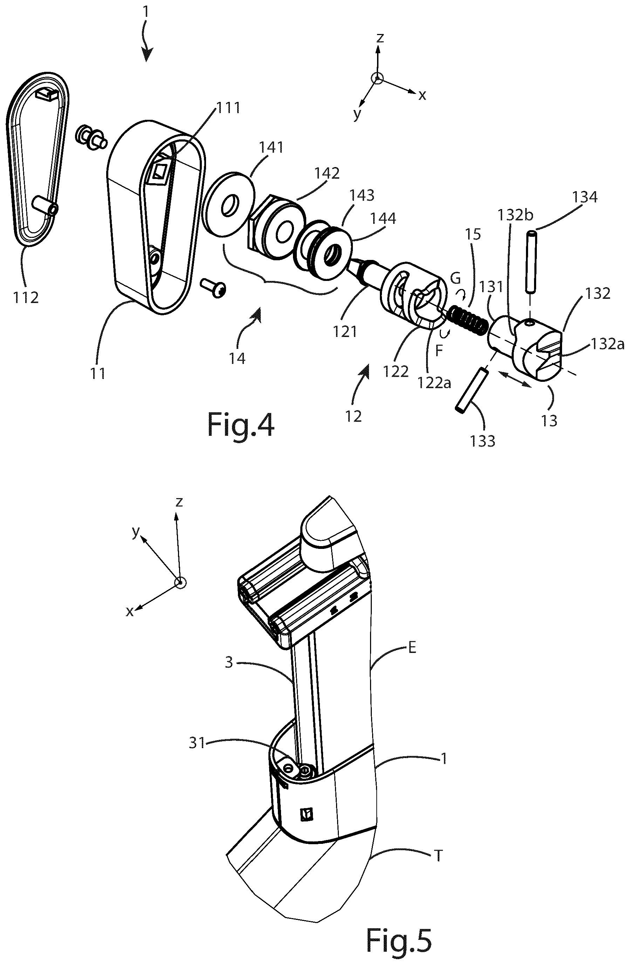

Referring now to figure 4, said adjustment device 1 essentially comprises a lever 11, a first element 12, and a second element 13.

Said lever 11 has an elongated shape and develops mainly in a direction B, parallel to the axis Z of a Cartesian reference system XYZ, and has a symmetry axis D.

Said lever 11 also comprises a covering surface 112.

Also said lever 11 is capable of passing from said first position, to said second position, and to said third position and vice versa, operated manually by a user.

In particular, when said adjustment device 1 is in said first position, said lever is arranged with the symmetry axis D, parallel to said development direction B.

When said adjustment device 1 is in said second position, said symmetry axis D of said lever 11 is inclined with respect to said development direction B, forming an acute angle, preferably a 45° angle, with said development direction B.

When said adjustment device 1 is in said third position, said symmetry axis D of said lever 11 is arranged orthogonally with respect to said development direction B, thus forming a 90° angle with said development direction B.

Referring now to figure 4, said lever 11 is coupled to said first element 12 by means of shape coupling means 111 and is capable of modifying the position of said first element 12, as will be described in detail below.

Between said lever 11 and said first element 12, a plurality of coupling means 14 to make the coupling more stable and to reduce mechanical friction is arranged.

Said plurality of coupling means 14 essentially comprise a spacing element 141, a circular nut 142, and a disc spring 143 coupled to a support 144.

Said first element 12 comprises an appendix 121, which is inserted in said shape coupling means 111 of said lever 11, to carry out the coupling, in such a way that the movements performed on said lever 11 by said user are transmitted to said appendix 121.

Furthermore, said first element 12 comprises a circular hollow body 122 shaped on the external surface by means of a curved groove, having a first end and a second end, to guide the movement of said second element 13, as will be described in detail below.

Said first element 12 is able to rotate about itself around an axis parallel to said X-axis, according to a first rotation direction F, and according to a second rotation direction G, opposite to said first rotation direction F.

Finally, said circular hollow body of said first element 12 has an end shaped in such a way as to present a protrusion 122a.

Said second element 13 comprises a first end 131 and a second end 132.

Said first end 131 is able to fit into said hollow body 122 of said first element 12.

Said first 12 and second 13 elements are able to be coupled together by means of a shape coupling.

In particular, said second end 132 of said second element 13 is shaped so as to have a protrusion 132b.

Therefore, said first 12 and second element 13 by virtue of their respective shapes, are capable of sliding relatively between them until said protrusion 122a of said first element 12 and said protrusion 132b of said second element 13 abut each other.

Furthermore, on the external surface of said first end 131 a hole is obtained for housing a first pin 133, which is able to engage in the groove of said first element 12 during the movement of said first element 12 with respect to said second element 13 and vice versa, sliding from said first end towards said second end of said groove and vice versa.

Said first pin 133 can also be replaced by a shape coupling or by another element.

Said second end 132 of said second element 13 is provided with a protruding relief, such as a tooth 132a, capable of engaging with the teeth of said rack 2 in a complementary way.

On the external surface of said second end 132 of said second element 13 a hole is obtained for housing a second pin 134, capable of engaging by translation with a portion of the frame T of the gymnastic machine.

Said second element 13 is able to translate along said axis parallel to said X-axis, approaching and moving away from said circular hollow body 122.

Between said first end 131 of said second element 13 and the interior of said hollow body 122 of said first element 13 an elastic element is arranged, such as a spring 15.

Said spring 15 is capable of forcing said tooth 132a against said rack 2.

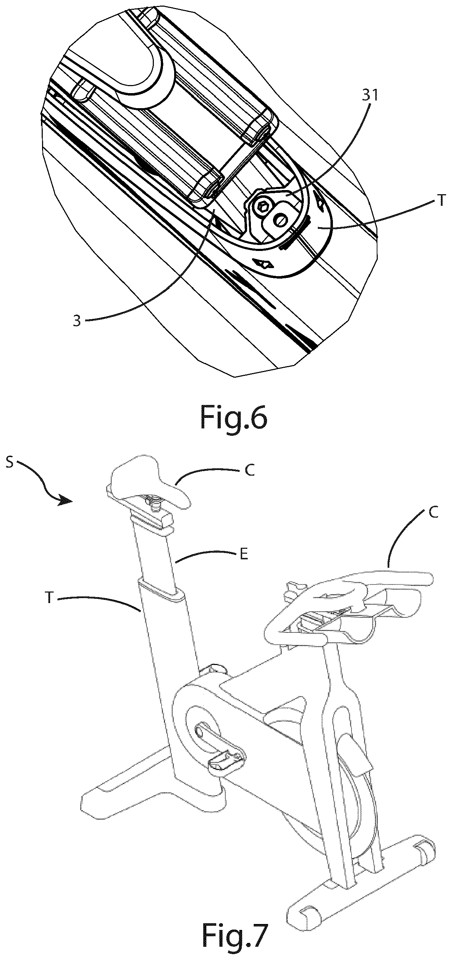

Referring now to figures 5 and 6, said system S also comprises a V-shaped element 3 and a wedge 31.

In particular, said V-shaped element 3 extends mainly along an axis parallel to said Z-axis, and can be coupled to said supporting element E.

Said wedge 31 can be coupled to said frame T and is able to engage with said V-shaped element 3 and block said supporting element E in said first locking position, so as to cancel the mechanical backlashes between said supporting element E and said frame T.

The operation of the adjusting system S of gymnastic machines components described above is as follows.

When a user of the gymnastic machine is performing an exercise, said supporting element E, and therefore said component C, are stationary in said first position or locking position.

In this position, said lever 11 is arranged with the symmetry axis D parallel to said development direction B.

Said first element 12 and second element 13 are coupled and locked together.

In said locking position, said protrusion 122a of said first element and said protrusion 132b of said second element 13 abut against each other.

In particular, said second element 13 is inserted in said circular hollow body 122, said first pin 133 abuts on one end of said groove of said first element 12, while said second pin 134 abuts on the frame T of said gymnastic machine.

Said spring 15 is partially compressed and pushes against said second element 13, which therefore cannot perform any movement.

Said tooth 132a is engaged in a respective tooth of said rack 2 in a predetermined adjustment position.

Said V shaped element 3 is kept under pressure against said wedge 31, thus eliminating all possible mechanical backlashes between said supporting element E and said frame T.

When the user needs to adjust the position of the component C, and therefore of said supporting element E, it rotates said lever 11 towards said second position, or first release position, in which said symmetry axis D forms an acute angle, preferably of 45°, with said development direction B.

In this position, said first element 12 makes a rotation about itself according to said first rotation direction F, therefore said groove slides with respect to said first pin 133 of said second element 13, said second pin is coupled to the frame T and said second element 13 is free to translate according to said direction parallel to the X-axis, approaching with respect to said first element 12.

Said tooth 132a is still engaged in said rack 2, however, being said second element 13 able to translate, the user can slide said supporting element E towards said extracted position to lift said component C since the teeth of said rack can slide on said first tooth 132a.

In this second position, the user can only lift said component C, since the rack 2 can only slide upwards.

In fact, the downward sliding is prevented by the tooth 132a of the second element 13, which abuts against the corresponding tooth of said rack 2, on which it is engaged.

By continuing rotating said lever 11, the user rotates said lever 11 in said third position, or second release position, in which said symmetry axis D forms a right angle with said development direction B.

In this position, said first element 12 continues rotating according to said first rotation direction F, said groove of said first element 12 continues sliding with respect to said first pin 133, reaching the stop of said first pin 133 on the opposite end of said groove, with respect to the one on which it was in abutment in the first position.

Said spring 15 is further compressed by said second element 13, which, by means of said first pin 133, translates approaching said first element 12, while said second pin 134 translates in said frame T.

Said tooth 132a is completely disengaged by said rack 2, therefore the user can slide said supporting element E towards said retracted position to lower said component C since the teeth of said rack can slide freely on said first tooth 132a, downward.

In this second position, the user can also lift said component C, since the rack 2 can slide both upwards and downwards.

Without departing from the scope of protection of the present invention, the sliding of said supporting element E, and therefore of said component C, can also occur in a direction parallel to the X-axis, therefore horizontally with respect to the ground.

As is evident from the present description, said system allows a user quickly adjusting the component position, reducing or completely eliminating at the same time the mechanical backlashes between the component supporting element and the frame of the gymnastic machine.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Adjustment system (S) of a component (C) of a gymnastic machine of the type comprising a frame (T), in which a supporting element (E) of said component (C) is capable of sliding, from a retracted position, in which said supporting element (E) is completely or almost completely inserted inside said frame (T), to an extracted position, in which said supporting element (E) exits almost completely from said frame (T), moving through a plurality of intermediate adjustment positions, said system (S) comprising:
at least one linear gear (2) fixable on said supporting element (E), and therefore capable of sliding from said retracted position to said extracted position and vice versa,
an adjustment device (1), couplable to said frame (T), capable of engaging with said at least one linear gear (2), said system (S) being **characterized in that** said adjustment device (1) is capable of assuming
a first position, or locking position, in which said adjustment device (1) is engaged with said at least one linear gear (2), so that said supporting element (E) is locked in said frame (T);
a second position, or first release position, in which said adjustment device (1) is disengageable from said at least one linear gear (2), so that said supporting element (E) is capable to slide towards said extracted position, and
a third position, or second release position, in which said adjustment device (1) is completely disengaged from said at least one linear gear (2), so that said supporting element (E) is capable to slide both towards said extracted position and towards said retracted position.

2. System (S) according to the preceding claim, **characterized in that** said adjustment device (1) comprises
a first element (12), manually operated,
a second element (13), capable of moving between an engagement and disengagement position from said at least one linear gear (2),
said first element (12) being capable of adjusting the movement of said second element (13) between said engagement and disengagement positions.

3. System (S) according to the preceding claim, **characterized in that** said adjustment device (1) comprises a lever (11), manually operated by a user, fixable to said first element (12) and capable of adjusting the movement of said first element (12).

4. System (S) according to the preceding claim, **characterized in that** said first element (12) comprises
an appendix (121), capable of inserting in said lever (11), so that the movements carried out on said lever (11) by a user are transmitted to said appendix (121), and
a circular hollow body (122) shaped on the external surface by means of a curved groove, comprising a first end and a second end, for adjusting the movement of said second element (13).

5. System (S) according to any one of claims 2-4, **characterized**
**in that** said first element (12) is capable of rotating on itself according to a first rotation direction (F) and according to a second rotation direction (G), opposite to said first rotation direction (F), and
**in that** said second element (13) is capable of moving axially in approaching and departing from said first element (12).

6. System (S) according to any one of claims 2-5, **characterized**
**in that** said first element (12) comprises a circular hollow body (122) on which a groove provided with a first end and a second end is obtained, and
**in that** said second element (13) comprises a first pin (133) capable of sliding in said groove in order to go flush on said first end and then on said second end and vice versa, during the movement of said second element (13) between said engagement position and said disengagement position from said at least one linear gear (2), and vice versa.

7. System (S) according to any one of claims 2-6, **characterized in that** said second element (13) comprises a tooth (132a) capable of
engaging with said linear gear (2), when said adjustment device (1) is in said first position, so as to lock said supporting element (E) in a predetermined position,
disengaging from said linear gear (2), when said adjusting device (1) is in said second position, only in the sliding direction of said supporting element (E) towards said extracted position, and
disengaging from said linear gear (2), when said adjustment device (1) is in said third position, both in the sliding direction of said supporting element (E) towards said extracted position and to said retracted position.

8. System (S) according to any one of the preceding claims, **characterized**
**in that** it comprises a V shaped element (3), couplable to said supporting element (E) of said gymnastic machine, and
**in that** it comprises a wedge (31), couplable to said frame (T) of said gymnastic machine, capable of engaging and locking said V shaped element (3) in said first position of said adjustment device (1), so as to eliminate the backlashes between said supporting element (E) and said frame (T), in said first position.

9. System (S) according to any one of the preceding claims, **characterized**
**in that** said linear gear (2) is a rack, and
**in that** the number of positions of said plurality of adjustment positions is defined by the number of the teeth of said rack (2).

10. Gymnastic machine of the type comprising a frame (T) in which a supporting element (E) of a component (C)is capable of sliding, like a sitting, a handlebar, a monitor, an interface device and the like, from a retracted position, in which the supporting element (E) is completely or almost completely inserted inside said frame (T), to an extracted position, in which the supporting element (E) exits almost completely from said frame (T), moving through a plurality of intermediate adjustment positions, **characterized in that** it comprises an adjustment system (S) according to any one of the preceding claims 1-9.
